# EUROPEAN PATENT APPLICATION

(11) **EP 4 492 138 A1**
(43) Date of publication of application: **15.01.2025**
(21) Application number: 22930490.2
(22) Date of filing: 28.06.2022
(51) Int. Cl.: G03B 21/20, G02B 27/01

(54) **OPTICAL PROJECTION SYSTEM AND ELECTRONIC DEVICE**

(30) Priority: 10.03.2022 CN 202210240933
(71) Applicant: Goertek Optical Technology Co., Ltd, Weifang, Shandong 261031 (CN)
(72) Inventor: LI, Guiyu, Weifang, Shandong 261031 (CN); XU, Yaling, Weifang, Shandong 261031 (CN); XIE, Dianliang, Weifang, Shandong 261031 (CN)
(74) Representative: Rau, Schneck & Hübner Patentanwälte Rechtsanwälte PartGmbB
(86) International application number: PCT/CN2022/101698
(87) International publication number: WO 2023/168861

(57) **Abstract**

The present disclosure provides an optical projection system and an electronic device. The optical projection system comprises a light source module and a projection module; the light source module has a light-emergent surface; the projection module comprises an entrance pupil, an optical path processing component, and an exit pupil; the light-emergent surface is provided opposite to the entrance pupil, the entrance pupil and the exit pupil are in a conjunctional relationship, the optical path processing component is configured for receiving a first light beam transmitted from the entrance pupil, and the exit pupil is configured for receiving a second light beam transmitted from the optical path processing component.

## Description

### TECHNICAL FIELD

The present disclosure relates to the technical field of an optical projection system, and particularly to an optical projection system and an electronic device.

### BACKGROUND

Head-mounted augmented reality near-eye display devices are display application devices that enable users to experience virtual images combined with the environment. The head-mounted display devices emphasize comfort, and the volume and weight of the projection system in the head-mounted display device are important factors in determining the comfort of the head-mounted display devices.

When the projection system is equipped with an LCoS (Liquid Crystal on Silicon) display screen, it requires an additional light source module to provide a light source since the LCoS display screen is a non-self-luminous display screen, and also requires an illumination module to conduct the light generated by the light source module to the LCoS display screen. The LCoS display screen then reflects the light beam with displayed information to the projection module, and the light beam is further transmitted through the exit pupil of the projection module to an optical waveguide for subsequent conduction to the user's eye.

However, the existing projection systems fail to meet the requirements of users in terms of the volume and weight, resulting in the users not being able to have a satisfactory comfort experience when using the head-mounted display device.

### SUMMARY

An objective of the present disclosure is to provide a new technical solution for an optical projection system and an electronic device.

According to a first aspect of embodiments of the present disclosure, an optical projection system is provided. The optical projection system comprises: a light source module and a projection module;
the light source module has a light-emergent surface;
the projection module comprises an entrance pupil, an optical path processing component, and an exit pupil;
the light-emergent surface is provided opposite to the entrance pupil, the entrance pupil and the exit pupil are in a conjunctional relationship, the optical path processing component is configured for receiving a first light beam transmitted from the entrance pupil, and the exit pupil is configured for receiving a second light beam transmitted from the optical path processing component.

Optionally, the light-emergent surface has a first diameter dimension, the entrance pupil has a second diameter dimension, the exit pupil has a third diameter dimension, the first diameter dimension equals to the second diameter dimension, and the second diameter dimension equals to the third diameter dimension.

Optionally, the optical path processing component comprises a polarization component and a lens component;
the polarization component is located on one side of the entrance pupil, and is configured for receiving a first light beam transmitted from the entrance pupil and transmitting the first light beam to the lens component.

Optionally, the polarization component is formed by connecting inclined surfaces of two right-angle tri-prisms.

Optionally, the two right-angle tri-prisms comprise a first right-angle tri-prism and a second right-angle tri-prism, a side surface of the first right-angle tri-prism distal to the second right-angle tri-prism is an incident surface, and a side surface of the second right-angle tri-prism distal to the first right-angle tri-prism is an emergent surface, and the incident surface and the emergent surface are perpendicular to each other;
the entrance pupil is located on one side of the incident surface and is at a first distance from the incident surface, the exit pupil is located on one side of the emergent surface and is at a second distance from the emergent surface, and the first distance equals to the second distance.

Optionally, the polarization component comprises a first condensing lens group, a second condensing lens group, and a polarizing beam-splitting plate, the first condensing lens group is located between the entrance pupil and the polarizing beam-splitting plate, and the second condensing lens group is located between the exit pupil and the polarizing beam-splitting plate.

Optionally, the entrance pupil is at a third distance from a center of the first condensing lens group, the exit pupil is at a fourth distance from a center of the second condensing lens group, and the third distance equals to the fourth distance; the center of the first condensing lens group is at a fifth distance from a center of the polarizing beam-splitting plate, the center of the second condensing lens group is at a sixth distance from the center of the polarizing beam-splitting plate, and the fifth distance equals to the sixth distance.

Optionally, the first condensing lens group and the second condensing lens group have equal focal powers.

Optionally, the light source module comprises a light source, a collimating lens group, a mirror group, and a microlens array; the light source emits the first light beam, which sequentially passes through the collimating lens group and the mirror group to the microlens array, and a light-emergent surface of the microlens array is provided opposite to the entrance pupil.

Optionally, the optical module comprises a light source, an optical integrator column, and a condensing lens group; the light source emits the first light beam, which is transmitted to the condensing lens group by passing through the optical integrator column, and a light-emergent surface of the condensing lens group is provided opposite to the entrance pupil.

Optionally, the optical projection system further comprises a non-self-luminous display screen, which is configured for receiving the first light beam transmitted from the projection module and reflecting the first light beam to form the second light beam, and the second light beam is transmitted to the exit pupil by passing through the projection module.

Optionally, the non-self-luminous display screen is an LCoS display screen.

In a second aspect of embodiments of the present disclosure, an electronic device is provided. The electronic device comprises the optical projection system of the first aspect.

In the embodiment of the present disclosure, the optical projection system comprises a light source module and a projection module, the light-emergent surface of the light source module is provided opposite to the entrance pupil of the projection module while the entrance pupil and the exit pupil of the light source module are in a conjunctional relationship, such that the light source module may be directly coupled to the projection module, which avoids the use of an illumination module to conduct light from the light source module to the projection module and thus reduces the volume of the optical projection system.

Other features and advantages of the present disclosure will become apparent from the following detailed description of exemplary embodiments of the present disclosure with reference to the accompanying drawings.

### BRIEF DESCRIPTION OF THE DRAWINGS

In order to clearly illustrate embodiments of the present disclosure or technical solutions in the prior art, accompanying drawings that need to be used in description of the embodiments or the prior art will be briefly introduced as follows. Obviously, drawings in following description are only the embodiments of the present disclosure. For those skilled in the art, other drawings can also be obtained according to the disclosed drawings without creative efforts.
FIG. 1 shows a first structural diagram of an optical projection system of the present disclosure.
FIG. 2 shows a second structure of the optical projection system of the present disclosure.
FIG. 3 shows a third structure of the optical projection system of the present disclosure.

### Description of reference signs:

1. light source module; 10. light-emergent surface; 11. light source; 12. collimating lens group; 13. mirror group; 14. microlens array; 15. optical integrator column; 16. condensing lens group;
2. projection module; 21. entrance pupil; 22. exit pupil; 23. optical path processing component; 231. polarization component; 232. lens component; 2311. first right-angle tri-prism; 2312. second right-angle tri-prism; 2313. first condensing lens group; 2314. second condensing lens group; 2315. polarizing beam-splitting plate;
3. non-self-luminous display screen.

### DETAILED DESCRIPTION

Various exemplary embodiments of the present disclosure will now be described in detail with reference to the accompanying drawings. It is to be noted that unless otherwise specified, the scope of present disclosure is not limited to relative arrangements, numerical expressions and values of components and steps as illustrated in the embodiments.

Description to at least one exemplary embodiment is for illustrative purpose only, and in no way implies any restriction on the present disclosure or application or use thereof.

Techniques, methods and devices known to those skilled in the prior art may not be discussed in detail; however, such techniques, methods and devices shall be regarded as part of the description where appropriate.

In all the examples illustrated and discussed herein, any specific value shall be interpreted as illustrative rather than restrictive. Different values may be available for alternative examples of the exemplary embodiments.

It is to be noted that similar reference numbers and alphabetical letters represent similar items in the accompanying drawings. In the case that a certain item is identified in a drawing, further reference thereof may be omitted in the subsequent drawings.

The present disclosure provides an optical projection system, which may be applied to an electronic device such as head-mounted display devices and wrist-mounted display devices. When the optical projection system is applied to the electronic device, it is possible to reduce the overall weight of the electronic device and also reduce the volume of the electronic device.

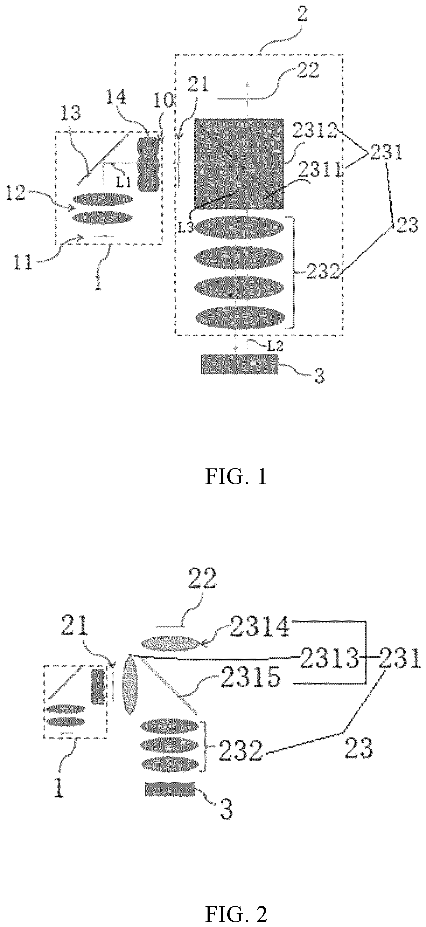

As shown in FIGS. 1-3, an optical projection system comprises: a light source module 1 and a projection module 2; the light source module 1 has a light-emergent surface 10; the projection module 2 comprises an entrance pupil 21, an optical path processing component 23, and an exit pupil 22; the light-emergent surface 10 is provided opposite to the entrance pupil 21, the entrance pupil 21 and the exit pupil 22 are in a conjunctional relationship, the optical path processing component 23 is configured for receiving the first light beam transmitted from the entrance pupil 21, and the exit pupil 22 is configured for receiving the second light beam L2 transmitted from the optical path processing component 23. Wherein, the first light beam comprises a first light beam L1 which is unpolarized, and a first light beam L3 in a first polarization state.

In this embodiment, the light-emergent surface 10 of the light source module 1 is provided opposite to the entrance pupil 21 of the projection module 2 while the entrance pupil 21 and the exit pupil 22 are in a conjunctional relationship with respect to the projection module 2, such that the light emitted from the light source module 1 directly enter into the projection module 2 through the entrance pupil 21. After the light from the light source module 1 enters into the projection module 2, itis further conducted to the non-self-luminous display screen 3 through the projection module 2, the non-self-luminous display screen 3 reflects the light beam with displayed information, and allows it to pass through the projection module 2 for the second time to arrive at the exit pupil 22 and then enters into the user's eyeball. Therefore, in the embodiment of the present disclosure, the first light beam is the light emitted from the light source module 1, and the second light beam is the light reflected by the non-self-luminous display screen 3.

In this embodiment, the light-emergent surface 10 of the light source module 1 is provided opposite to the entrance pupil 21 of the projection module 2 while the entrance pupil 21 and the exit pupil 22 are in a conjunctional relationship with respect to the projection module 2. Compared with the prior art, the present disclosure avoids the use of an illumination module to conduct the light emitted from the light source module 1 to the projection module 2 and thus reduces the number of optical elements, achieving a small volume and lightweight effect of the optical projection system. In addition, the relative position of the entrance pupil 21 and the exit pupil 22 affects clarity and brightness of the image. In this embodiment, the position relationship between the light-emergent surface 10 of the light source module 1 and the entrance pupil 21, and the definition of the conjugation relationship between the entrance pupil 21 and the exit pupil 22, enhance the clarity and brightness of the image.

In one specific embodiment, the exit pupil 22 and the entrance pupil 21 may be aperture stops.

In one embodiment, the light-emergent surface 10 has a first diameter dimension, the entrance pupil 21 has a second diameter dimension, and the exit pupil 22 has a third diameter dimension, the first diameter dimension equals to the second diameter dimension, and the second diameter dimension equals to the third diameter dimension.

In this embodiment, the diameter dimension of the light-emergent surface 10 defines the range of the light emitted by the light source module 1. The exit pupil 22 and the entrance pupil 21 function to limit the imaging beam and the imaging range. Therefore, it is necessary to regulate the size of the light-emergent surface 10, the aperture size and position of the exit pupil 22, and the aperture size and position of the entrance pupil 21 to ensure projection quality.

To enhance both the clarity and brightness of the imaging, this embodiment specifies that the diameter dimension of the light-emergent surface 10 equals to the diameter dimension of the entrance pupil 21, allowing the light emitted by the light source module 1 to be largely conducted to the projection module 2; and also specifies that the diameter dimension of the entrance pupil 21 equals to the diameter dimension of the exit pupil 22, further enhancing the imaging quality.

In one specific embodiment, the range of the first diameter dimension is: 2mm-8mm, and optionally, the first diameter dimension may be: 3mm, 5mm. The range of the second diameter dimension is: 2mm-8mm, and optionally, the second diameter dimension may be: 3mm, 5mm. The range of the third diameter dimension is: 2mm-8mm, and optionally, the third diameter dimension may be: 3mm, 5mm.

For example, if the entrance pupil 21 and the exit pupil 22 are both aperture stops. If the size of the aperture stop is too large, the clarity of the image projected by the projection module will deteriorate (blur); alternatively, if the size of the aperture stop is too small, the brightness of the projected image will decrease. To enhance both the clarity and brightness of the imaging, this embodiment limits the first diameter dimension, the second diameter dimension, and the third diameter dimension within this range.

In one embodiment, as shown in FIGS. 1-3, the optical path processing component 23 comprises a polarization component 231 and a lens component 232; the polarization component 231 is located on one side of the entrance pupil 21 and is configured for receiving the first light beam transmitted from the entrance pupil 21 and transmitting the first light beam to the lens component 232.

In this embodiment, the optical path processing component 23 comprises the polarization component 231 and the lens component 232. The first light beam L1 emitted from the light source module 1 is directly conducted to the polarization component 231, and is processed by the polarization component 231, such that the first light beam L3 in the first polarization state is conducted to the lens component 232, and the first light beam L3 in the first polarization state is conducted to the non-self-luminous display screen 3 through the lens component 232. The non-self-luminous display screen 3 reflects back the second light beam L2 with displayed information in the form of a second polarization state and allows it to pass through the lens component 232 and the polarization component 231 for the second time to arrive at the exit pupil 22.

In this embodiment, since the polarization component 231 is located on one side of the entrance pupil 21, and the entrance pupil 21 and the exit pupil 22 are in a conjunctional relationship, the entrance pupil 21 and the exit pupil 22 are thus symmetrically located on two sides of the polarization component 231. For example, the entrance pupil 21 is the first aperture stop, the exit pupil 22 is the second aperture stop, and if the relative position of the first aperture stop and the second aperture stop is deviated (i.e., the entrance pupil 21 and the exit pupil 22 are not symmetrically located on two sides of the polarization component 231), then the positional deviation error will become a factor restricting the optimal projection quality.

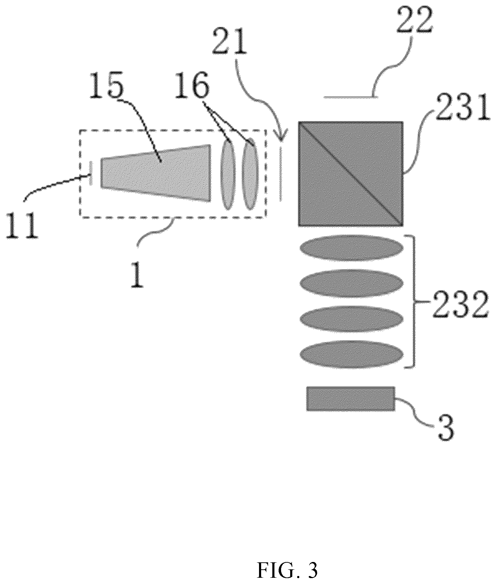

In one embodiment, as shown in FIGS. 1 and 3, the polarization component 231 is formed by connecting inclined surfaces of two right-angle tri-prisms.

In this embodiment, the polarization component 231 is formed by abutting the inclined surfaces of two right-angle tri-prisms, that is, the polarization component 231 is a polarization beam-splitting prism. Specifically, the inclined surfaces of the two right-angle tri-prisms may be connected by glue adhesion, which enables the adjacent components to be connected and fixed without affecting the passage of the light beam.

In one embodiment, as shown in FIGS. 1 and 3, the two right-angle tri-prisms comprise a first right-angle tri-prism 2311 and a second right-angle tri-prism 2312, a side surface of the first right-angle tri-prism 2311 distal to the second right-angle tri-prism 2312 is an incident surface, and a side surface of the second right-angle tri-prism 2312 distal to the first right-angle tri-prism 2311 is an emergent surface, and the incident surface and the emergent surface are perpendicular to each other;

The entrance pupil 21 is located on one side of the incident surface and is at a first distance from the incident surface, the exit pupil 22 is located on one side of the emergent surface and is at a second distance from the emergent surface, and the first distance equals to the second distance.

In this embodiment, the first light beam L1 in a non-polarized state emitted from the light source module 1 is reflected by the polarizing beam-splitting prism to become the first light beam L3 in the first polarization state, and the first light beam L3 in the first polarization state passes through the lens component 232 and enters into the non-self-luminous display screen 3. The non-self-luminous display screen 3 reflects back the second light beam L2 with displayed information in the form of the second polarization state and allows it to pass through the lens component 232 and the polarizing beam-splitting prism for the second time to arrive at the exit pupil 22.

In this embodiment, the entrance pupil 21 is located on one side of the incident surface, and the exit pupil 22 is located on one side of the emergent surface. Since the incident surface and the emergent surface are perpendicular to each other, the entrance pupil 21 and the exit pupil 22 are thus positioned perpendicularly to each other, and at the same time, a distance of the entrance pupil 21 from the incident surface equals to the distance of the exit pupil 22 from the emergent surface, that is, the entrance pupil 21 and the exit pupil 22 are symmetrically provided on two sides of the polarizing beam-splitting prism, enabling the entrance pupil 21 and the exit pupil 22 to be in a conjunctional relationship.

In this embodiment, the light source module 1 is directly coupled with the polarizing beam-splitting prism without the need for an illumination module, thus reducing the number of optical elements and thus achieving the effect of reducing the size and weight of the optical projection system.

In one embodiment, as shown in FIG. 2, the polarization component 231 comprises a first condensing lens group 2313, a second condensing lens group 2314, and a polarizing beam-splitting plate 2315, the first condensing lens group 2313 is located between the entrance pupil 21 and the polarizing beam-splitting plate 2315, and the second condensing lens group 2314 is located between the exit pupil 22 and the polarizing beam-splitting plate 2315.

In this embodiment, the unpolarized first light beam L1 emitted from the light source module 1 passes through the first condensing lens group 2313 and is conducted to the polarizing beam-splitting plate 2315. The unpolarized first light beam L1 is reflected by the polarizing beam-splitting plate 2315 to become the first light beam L3 in the first polarization state. The first light beam L3 in the first polarization state passes through the lens component 232 and enters into the non-self-luminous display screen 3. The non-self-luminous display screen 3 reflects back the second light beam L2 with displayed information in the form of the second polarization state and allows it to pass through the lens component 232 and the polarizing beam-splitting plate 2315 for the second time to arrive at the second condensing lens group 2314, which conducts the received light beam to the exit pupil 22. The first condensing lens group 2313 comprises at least one condensing lens. The second condensing lens group 2314 comprises at least one condensing lens.

In one embodiment, as shown in FIG. 2, the entrance pupil 21 is at a third distance from a center of the first condensing lens group 2313, the exit pupil 22 is at a fourth distance from a center of the second condensing lens group 2314, and the third distance equals to the fourth distance; the center of the first condensing lens group 2313 is at a fifth distance from a center of the polarizing beam splitter 2315, the center of the second condensing lens group 2314 is at a sixth distance from the center of the polarizing beam splitter 2315, and the fifth distance equals to the sixth distance.

In this embodiment, it is defined that the distance from the entrance pupil 21 to the first condensing lens group 2313 equals to the distance from the exit pupil 22 to the second condensing lens group 2314, and it is also defined that the distance from the center of the first condensing lens group 2313 to the center of the polarizing beam-splitting plate 2315 equals to the distance from the center of the second condensing lens group 2314 to the center of the polarizing beam-splitting plate 2315. i.e., the distance from the entrance pupil 21 to the center of the first condensing lens group 2313 equals to the distance from the exit pupil 22 to the center of the first condensing lens group 2313. That is, by defining the distance from the pupil to the polarizing beam-splitting plate 2315, the entrance pupil 21 and the exit pupil 22 are enabled to be symmetrically provided on two sides of the polarizing beam-splitting plate 2315. When the entrance pupil 21 and the exit pupil 22 are symmetrically provided on two sides of the polarizing beam-splitting plate 2315, they are in a conjunctional relationship with respect to the polarizing beam-splitting plate 2315.

In this embodiment, the light source module 1 is directly coupled with the first condensing lens group 2313 without the need for the illumination module, thus reducing the number of optical elements and achieving the effect of reducing the size and weight of the optical projection system.

In an optional embodiment, the first and second condensing lens groups have the same or similar focal powers, allowing the exit pupil and the entrance pupil to be in a conjunctional relationship with respect to the polarizing beam-splitting plate.

In one embodiment, as shown in FIG. 1, the light source module 1 comprises a light source 11, a collimating lens group 12, a mirror group 13, and a microlens array 14; the light source 11 emits the first light beam, which sequentially passes through the collimating lens group 12 and the mirror group 13 to the microlens array 14, and a light-emergent surface 10 of the microlens array 14 is provided opposite to the entrance pupil 21.

In this embodiment, the light source 11 (for example, the light source 11 may be an LED) emits a first light beam which is unpolarized. The unpolarized first light beam passes through the collimating lens group 12 and the mirror group 13 to the microlens array 14. The light-emergent surface 10 of the microlens array 14 is provided opposite to and nearly overlaps with the entrance pupil 21 of the projection module 2. The unpolarized first light beam passing through the microlens array 14 is reflected by the polarization component 231 to become the first light beam in the first polarization state, and the first light beam in the first polarization state passes through the lens component 232 into the non-self-luminous display screen 3. The non-self-luminous display screen 3 reflects the second light beam with displayed information back in the form of the second polarization state, and allows it to pass through the lens component 232 and the polarization component 231 for the second time to arrive at the exit pupil 22. Wherein, the first polarization state is the S polarization state, and the second polarization state is the P polarization state. In this embodiment, the mirror group 13 comprises at least one reflection mirror.

In one embodiment, as shown in FIG. 2, the optical module comprises a light source 11, an optical integrator column 15, and a condensing lens group 16; the light source 11 emits the first light beam, which is transmitted to the condensing lens group 16 through the optical integrator column 15, and a light-emergent surface 10 of the condensing lens group 16 is provided opposite to the entrance pupil 21.

In this embodiment, the optical module comprises the light source 11, the optical integrator column 15, and the condensing lens group 16. The optical integrator column 15 performs homogenization processing on the light emitted by the light source 11.

In one embodiment, the optical projection system further comprises a non-self-luminous display screen 3, which is configured for receiving the first light beam transmitted from the projection module 2 and reflecting the first light beam to form the second light beam, and the second light beam is transmitted to the exit pupil 22 through the projection module 2.

Specifically, if the display screen is the self-luminous display screen, there is no need for the light source module 1 to transmit light to the display screen. Therefore, in this embodiment, the light source module 1 and the projection module 2 are used in conjunction with the non-self-luminous display screen 3. The difference between the first light beam and the second light beam is that: the second light beam reflected by the non-self-luminous display screen 3 carries displayed information, while the first light beam emitted by the light source 11 does not carry displayed information. In addition, the non-self-luminous display screen 3 is configured for receiving the first light beam transmitted by the projection module 2, wherein the first light beam transmitted by the projection module 2 is the first light beam in the first polarization state. The second light beam formed by the reflection of the non-self-luminous display screen 3 is the second light beam in the second polarization state. The polarization state of the first light beam received by the non-self-luminous display screen 3 is different from the polarization state of the second light beam it emits, allowing the second light beam carrying displayed information to be transmitted through the polarization component 231 to the exit pupil 22.

In one embodiment, the non-self-luminous display screen 3 is an LCoS display screen. In this embodiment, the LCoS display screen may change the polarization of light and enable the light emitted by the LCoS display screen to be transmitted through the polarization component 231 to the exit pupil 22.

According to another aspect of the present disclosure, an electronic device is provided. The electronic device comprises the optical projection system as described in the first aspect.

In this embodiment, the electronic device comprises the aforementioned optical projection system, which reduces the volume and weight of the electronic device. For example, the electronic device may be smart glasses.

The above embodiments focus on the description of the differences between the various embodiments, and the different optimization features between the various embodiments can be combined to form a better embodiment as long as they do not contradict each other, which will not be repeated herein taking into account the brevity of the text.

Although some specific embodiments of the present disclosure have been described in detail by way of examples, it should be understood by those skilled in the art that the above examples are for illustrative purposes only and are not intended to limit the scope of the present disclosure. Those skilled in the art should understand that the above embodiments may be modified without departing from the scope and spirit of the present disclosure. The scope of the present disclosure is limited by the appended claims.

## Claims

1. An optical projection system, **characterized by** comprising: a light source module (1) and a projection module (2);
the light source module (1) has a light-emergent surface (10);
the projection module (2) comprises an entrance pupil (21), an optical path processing component (23), and an exit pupil (22);
the light-emergent surface (10) is provided opposite to the entrance pupil (21), the entrance pupil (21) and the exit pupil (22) are in a conjunctional relationship, the optical path processing component (23) is configured for receiving a first light beam transmitted from the entrance pupil (21), and the exit pupil (22) is configured for receiving a second light beam transmitted from the optical path processing component (23).

2. The optical projection system of claim 1, **characterized in that** the light-emergent surface (10) has a first diameter dimension, the entrance pupil (21) has a second diameter dimension, the exit pupil (22) has a third diameter dimension, the first diameter dimension equals to the second diameter dimension, and the second diameter dimension equals to the third diameter dimension.

3. The optical projection system of claim 1, **characterized in that** the optical path processing component (23) comprises a polarization component (231) and a lens component (232);
the polarization component (231) is located on one side of the entrance pupil (21), and is configured for receiving a first light beam transmitted from the entrance pupil (21) and transmitting the first light beam to the lens component (232).

4. The optical projection system of claim 3, **characterized in that** the polarization component (231) is formed by connecting inclined surfaces of two right-angle tri-prisms.

5. The optical projection system of claim 4, **characterized in that** the two right-angle tri-prisms comprise a first right-angle tri-prism (2311) and a second right-angle tri-prism (2312), a side surface of the first right-angle tri-prism (2311) distal to the second right-angle tri-prism (2312) is an incident surface, and a side surface of the second right-angle tri-prism (2312) distal to the first right-angle tri-prism (2311) is an emergent surface, and the incident surface and the emergent surface are perpendicular to each other;
the entrance pupil (21) is located on one side of the incident surface and is at a first distance from the incident surface, the exit pupil (22) is located on one side of the emergent surface and is at a second distance from the emergent surface, and the first distance equals to the second distance.

6. The optical projection system of claim 3, **characterized in that** the polarization component (231) comprises a first condensing lens group (2313), a second condensing lens group (2314), and a polarizing beam-splitting plate (2315), the first condensing lens group (2313) is located between the entrance pupil (21) and the polarizing beam-splitting plate (2315), and the second condensing lens group (2314) is located between the exit pupil (22) and the polarizing beam-splitting plate (2315).

7. The optical projection system of claim 6, **characterized in that** the entrance pupil (21) is at a third distance from a center of the first condensing lens group (2313), the exit pupil (22) is at a fourth distance from a center of the second condensing lens group (2314), and the third distance equals to the fourth distance; the center of the first condensing lens group (2313) is at a fifth distance from a center of the polarizing beam-splitting plate (2315), the center of the second condensing lens group (2314) is at a sixth distance from the center of the polarizing beam-splitting plate (2315), and the fifth distance equals to the sixth distance.

8. The optical projection system of claim 6, **characterized in that** the first condensing lens group (2313) and the second condensing lens group (2314) have equal focal powers.

9. The optical projection system of claim 1, **characterized in that** the light source module (1) comprises a light source (11), a collimating lens group (12), a mirror group (13), and a microlens array (14); the light source (11) emits the first light beam, which sequentially passes through the collimating lens group (12) and the mirror group (13) to the microlens array (14), and a light-emergent surface of the microlens array (14) is provided opposite to the entrance pupil (21).

10. The optical projection system of claim 1, **characterized in that** the optical module comprises a light source (11), an optical integrator column (15), and a condensing lens group (16); the light source (11) emits the first light beam, which is transmitted to the condensing lens group (16) by passing through the optical integrator column (15), and a light-emergent surface of the condensing lens group (16) is provided opposite to the entrance pupil (21).

11. The optical projection system of claim 1, **characterized in that** the optical projection system further comprises a non-self-luminous display screen (3), which is configured for receiving the first light beam transmitted from the projection module (2) and reflecting the first light beam to form the second light beam, and the second light beam is transmitted to the exit pupil (22) by passing through the projection module (2).

12. The optical projection system of claim 11, **characterized in that** the non-self-luminous display screen (3) is an LCoS (Liquid Crystal on Silicon) display screen.

13. An electronic device, **characterized by** comprising the optical projection system of any one of claims 1 to 12.
